# EUROPÄISCHE PATENTSCHRIFT

(11) **EP 1 343 676 B1**
(45) Veröffentlichungstag und Bekanntmachung des Hinweises auf die Patenterteilung: **20.04.2005**
(21) Anmeldenummer: 01985865.3
(22) Anmeldetag: 11.12.2001
(51) Int. Cl.: B61K 9/12, G01M 17/10, G01H 1/00, B61L 23/00

(54) **VERFAHREN UND VORRICHTUNG ZUM ÜBERWACHEN DES FAHRVERHALTENS VON SCHIENENFAHRZEUGEN UND DER DIAGNOSE VON KOMPONENTEN VON SCHIENENFAHRZEUGEN**
METHOD AND DEVICE FOR MONITORING THE HANDLING CHARACTERISTICS OF RAIL VEHICLES AND FOR DIAGNOSING COMPONENTS OF RAIL VEHICLES
PROCEDE ET DISPOSITIF PERMETTANT DE SURVEILLER LE COMPORTEMENT DE CONDUITE DE VEHICULES SUR RAILS ET LE DIAGNOSTIC DE COMPOSANTS DE VEHICULES SUR RAILS

(30) Priorität: 12.12.2000 DE 10062601
(43) Veröffentlichungstag der Anmeldung: 17.09.2003
(73) Patentinhaber: DB Reise & Touristik AG, 60326 Frankfurt (DE)
(72) Erfinder: SÄGLITZ, Mario, 12163 Berlin (DE); GUO, Yong, 10587 Berlin (DE)
(74) Vertreter: Zinken-Sommer, Rainer
(86) Internationale Anmeldenummer: PCT/EP2001/014554
(87) Internationale Veröffentlichungsnummer: WO 2002/047954

(56) Entgegenhaltungen:
- EP-A- 0 758 740
- WO-A-00/60322
- WO-A-82/00805
- DE-A- 19 836 081
- DE-A- 19 855 145
- PATENT ABSTRACTS OF JAPAN vol. 1998, no. 14, 31. Dezember 1998 (1998-12-31) & JP 10 253444 A (TOKYO GAS CO LTD;MITSUBISHI HEAVY IND LTD; ENTOROPII SOFTWARE KENKYUSH), 25. September 1998 (1998-09-25) & US 6 170 333 A (JINNAI ET AL.) 9. Januar 2001 (2001-01-09)

## Beschreibung

Die Erfindung betrifft ein Verfahren sowie eine Vorrichtung zum Überwachen des Fahrverhaltens von Schienenfahrzeugen und der Diagnose von Schäden an Komponenten von Schienenfahrzeugen, wobei nach einer anfänglichen reinen unüberwachten Lernphase mindestens ein das Beschleunigungsverhalten wenigstens einer Fahrzeugkomponente charakterisierendes Messdatum erfasst wird und das derart erfasste Messdatum mit einem zu erwartenden Messdatum verglichen wird.

Verfahren und Vorrichtungen der gattungsgemäßen Art sind bekannt. So ist beispielsweise bekannt, verschiedene Fahrzeugkomponenten eines Schienenfahrzeuges, beispielsweise Radsatz, Fahrgestell, Wagenkasten oder dergleichen, mit Beschleunigungssensoren zu bestücken, mittels denen das Beschleunigungsverhalten einzelner Fahrzeugkomponenten erfasst werden kann. Beim bestimmungsgemäßen Einsatz von Schienenfahrzeugen treten durch den Rad-Schiene-Kontakt bekanntermaßen Schwingungsanregungen auf, die durch die Beschleunigungssensoren erfassbar sind. Unregelmäßigkeiten, zum Beispiel Schadstellen an Rädern oder Dämpfersystemen, führen zu einem veränderten Beschleunigungsverhalten der Fahrzeugkomponenten. Dieses veränderte Beschleunigungsverhalten ist mittels der Beschleunigungssensoren detektierbar. Die von den Beschleunigungssensoren gelieferten Messsignale können im Zeit, Statistik- und/oder Frequenzbereich ausgewertet werden. Um einen Schadens- beziehungsweise Fehlerfall zu detektieren ist bekannt, zuvor zu bestimmten Schadens- beziehungsweise Fehlerfällen aus den Beschleunigungssignalen entwickelte Merkmale abzuspeichem und diese mit den aktuellen Werten der Merkmale zu vergleichen. Weichen die aktuellen Merkmalswerte von den erwarteten Merkmalswerten ab und/oder sind in Übereinstimmung mit den zuvor ermittelten, bestimmten Schadens- beziehungsweise Fehlerereignissen zugeordneten Merkmalswerten, kann auf das Vorliegen eines Schadens beziehungsweise eines Fehlers erkannt werden.

Bei diesen bekannten Verfahren und Vorrichtungen zeigte sich, dass für eine umfassende Überwachung beziehungsweise Diagnose mindestens einer Komponente eines Schienenfahrzeuges mehrere Merkmale je Sensorsignal benötigt werden. Nachteilig ist bei diesen bekannten Verfahren, dass die unterschiedlichen Merkmale häufig für sich isoliert genutzt werden. Sollten doch mehrere Merkmale zur Lösung der Überwachungs-/Diagnoseaufgabe verknüpft werden, so geschieht dies in der Regel auf Basis der Erfahrung des Entwicklers "manuell" durch Vorgabe von Verknüpfungsregeln und nicht automatisch, weil ein funktionaler Zusammenhang zwischen den Merkmalen entweder nicht existiert oder mit vertretbarem Aufwand nicht zu finden ist. Auch ist es mit bisherigen Verfahren mit mehreren Merkmalen in der Regel nicht möglich, so genannte "one-class classifier" zu realisieren, um so zum Beispiel ein Lernen vom Gutzustand mit mehreren Merkmalen zu ermöglichen.

Aus der DE 198 55 145 A 1 ist ein Verfahren und eine Vorrichtung zur laufenden Oberwachung von schwingungsfähigen Elementen oder Gesamtheiten jeglicher Art auf das Auftreten von Veränderungen bekannt. Diese Schrift lehrt das Erfassen gleicher oder zumindest gleichartiger Schwingungssignale an verschiedenen, einer Gesamtheit zugehörigen Bauelementen, die Ermittlung von Unterschieden zwischen diesen erfassten Schwingungssignalen sowie eine Klassifizierung und Bewertung dieser Unterschiede durch Nachahmung der Fähigkeiten des menschlichen Gehörs. Auf Grundlage dieser Bewertung sollen dann Rückschlüsse auf bestimmte Veränderungen gezogen werden. Die ermittelten Messsignale werden dabei im Hinblick auf ein charakteristisches Merkmal bzw. eine Merkmalskombination - z.B. im Frequenzbereich - ausgewertet. Bei einem derartigen Verfahren müssen zur Detektion eines Schadens- bzw. Fehlerfalles die diesen Fällen zuzuordnenden charakteristischen Merkmale (bzw. deren Verknüpfungsbeziehungen) vorab entwickelt und derart abgespeichert werden, dass ein zeitnaher Vergleich der aktuellen Messwerte mit den vorgegebenen Daten bzw. Verknüpfungen jeweils möglich ist. Ein derartiges System steht und fällt jedoch mit der Quantität und der Qualität der im Vorfeld herausgearbeiteten charakteristischen Merkmale. Es verbleibt stets die Gefahr, dass im Stadium des Systementwurfes Merkmale unerkannt bleiben und somit keine vollständige Überwachung erreicht werden kann.

Ferner erwähnt dieses Dokument die Möglichkeit, die Verknüpfungsbedingungen mit Methoden der Künstlichen Intelligenz bzw. mittels neuronaler Netze festzulegen. Die oben genannte grundsätzliche Problematik dieses Ansatzes wird dadurch jedoch nicht beseitigt. Insbesondere ist mit neuronalen Netzen kein stetiger Lemprozess, der zu beliebigen Zeitpunkten auf dem bis dahin jeweils kumulierten Wissensbestand aufbaut, realisierbar.

In DE 199 11 848 wird hinsichtlich einer Überwachung betriebsrelevanter Daten vorgeschlagen, Einzelsignale während des Betriebes von Schienenfahrzeugen zu messen und zu erfassen, diese anschließend zu wichten und die gewichteten Daten zu einer gewichteten Gesamtinformation zu verknüpfen. Die Messsignale einer definierten Sensorgruppe werden einzeln ausgewertet und gemäss einer eine Wichtung enthaltenden Regel zu stufenweisen Gruppen zusammengefasst. Dieses Dokument orientiert darauf, eine fahrzeugorientierte Gruppierung von Sensorsignalen vorzunehmen, die dann letztlich zu einem für den gesamten Zug geltenden Summenergebnis aggregiert werden. In Verbindung mit diesem Ansatz, das System aus dezentralen Nebenrechnem und einem Zentralrechner aufzubauen, soll sichergestellt werden, dass eine beliebige Zusammenstellung von Zugkompositionen aus den unterschiedlichsten Fahrzeug-Bautypen möglich ist. DE 199 11 848 beschreibt deshalb auch sehr detailliert, wie die zentrale Rechnerinstanz mit den jeweils dezentral auf den verschiedenen Fahrzeugen eines Zugverbandes angesiedelten Nebenrechnern kommuniziert und z.B. das Problem der Software-Aktualisierung innerhalb des Systems gelöst werden soll, ohne jedoch dabei auf die Funktionsweise der dezentralen Nebenrechner näher einzugehen.
DE 199 11 848 formuliert für sich ebenfalls die Aufgabenstellung, ein selbstlemendes System zur Verfügung zu stellen, welches "laufende Veränderungen im System ohne externe Eingriffe annehmen" kann. Das zu diesem Zweck offenbarte Master-Slave-Konzept verlagert dabei die "Lernkomponente" auf den zug-übergreifenden Zentralrechner. Der Lemprozess soll darin bestehen, dass der Zentralrechner bei "ungenügend ausgeprägten Ergebnissen" in den Nebenrechnem bestimmte Parameter und Routinen in einem "trial-and-error-Verfahren" verändern soll. Allerdings lehrt DE 199 11 848 dem Fachmann hierfür weder die für eine Realisierung notwendigen logischen Zusammenhänge noch werden grundlegende Definitionen in Bezug auf die erforderlichen Parameter und Routinen offenbart. Für den Fachmann erscheint es naheliegend, dass ein derartiges "trial-and-error-Verfahren" nur im Rahmen von Versuchsfahrten mit als "schadhaft" präparierten Komponenten, die auf dem Versuchsträger eingebaut sind, zur Anwendung kommen kann. Abgesehen davon, dass ebenso vage bleibt, was ein "ungenügend ausgeprägtes Ergebnis" denn nun konkret sei, deutet dieser Aspekt der in DE 199 11 848 dargelegten Konzeption darauf hin, dass das System derartige ausgeprägte Ergebnisse, die einen Fehler bzw. Schadensfall charakterisieren, für die Auswertung benötigt. Das hier offenbarte Konzept erfordert das Erlernen eines "Schlecht-Zustandes" durch Versuchsfahrten, der dann im Überwachungsbetrieb gleichsam als Vergleichsobjekt herangezogen wird.
Ebenso legen die Ausführungen der Kapitel 20 bzw. 21 von DE 199 11 848 nahe, dass sich das offenbarte Master-Slave-Konzept nicht nur auf den Datenaustausch von fahrzeugautark ermittelten Diagnoseergebnissen zu einer zentralen Auswertungs- bzw. Bewertungs-Instanz bezieht. Der Zentralrechner ("Master") muss zusätzlich auch Kenntnis von den auf den Fahrzeugen in dezentralen Nebenrechnem installierten Parametern und Routinen haben. Dadurch wird eine leistungsstarke und dem Diagnosesystem spezifisch zugeordnete Rechner-Instanz auf Zugebene benötigt, was in der praktischen Umsetzung des Betriebsalltages nicht unproblematisch ist.

EP 758 740 offenbart eine Methode bzw. Vorrichtung zur Überwachung von Schwingungen, bei der im Zuge einer anfänglichen, von einem Gut-Zustand ausgehenden Lemphase statistisch stabile Daten ermittelt werden, die sodann in einen vom offenbarten System als Ergebnis der Lemphase generierten Algorithmus einfliessen. Nach Durchlaufen einer hinreichend langen Lemphase erfolgt ein Umschalten in einen diesen Algorithmus verwendenden Überwachungsprozess (siehe z.B. die LED-Anzeige "learning completed" im Ausführungsbeispiel der EP 758 740). An einem derartigen System ist als nachteilig zu werten, dass in der Überwachungsphase eventuelle schleichende Veränderungsprozesse, die den Gut-Zustand nicht beeinträchtigen, nicht berücksichtigt werden können und zu einer erhöhten Fehlalarmrate führen können. Ebenso hat es sich als nachteilig herausgestellt, dass die Lernphase zur Erzielung einer zumindest einigermassen hinreichenden Zuverlässigkeit eine sorgfältige und umfassende Auswahl von durchlaufenen Gut-Zuständen erfordert.

Allgemein sind so genannte Support-Vektor-Maschinen bekannt, mittels denen ein unüberwachtes inkrementelles Lernen im hoch dimensionalen Raum effizient durchgeführt werden kann. Außerdem sind solche Maschinen für so genannte "one-class classification" geeignet. Ferner sind so genannte "sammon's mapping" und/oder SOM (self organizing map) bekannt, mittels denen ein mehrdimensionaler Datenraum in einer zweidimensionalen Ebene abgebildet werden kann.

Der Erfindung liegt die Aufgabe zugrunde, ein Verfahren und eine Vorrichtung der gattungsgemäßen Art zu schaffen, mittels denen in einfacher Weise die Überwachung des Fahrverhaltens und die Diagnose von Schienenfahrzeugen möglich ist. Es ist eine möglichst umfassende Überwachung potentieller störungsrelevanter Zustände von Fahrzeugkomponenten anzustreben, bei der die Gefahr von im Stadium des Systementwurfes bzw. der Systemerprobung unerkannter Zustandsmerkmale weitgehend minimiert wird. In diesem Zusammenhang sollte das Überwachungssystem in selbstlemender Weise auf einen fortlaufend kumulierbaren Wissensbestand zurückgreifen können.

Erfindungsgemäß wird diese Aufgabe durch ein Verfahren mit den im Anspruch 1 genannten Merkmalen gelöst. Dadurch, dass das mindestens eine erfasste Messdatum während des Betriebseinsatzes des Schienenfahrzeuges (10) zugleich für den aktuellen Überwachungsvergleich herangezogen wird als auch in einen unüberwachten inkrementellen Lernvorgang zur Ermittlung eines mehrdimensionalen, durch Merkmalsvektoren (58) erfasster Messdaten aufgespannten Raumes (60) für zu einem späteren Zeitpunkt stattfindende Vergleiche eingebunden wird, ist es vorteilhaft möglich, relevante Überwachungskriterien auf Basis von zu einem früheren Zeitpunkt aus dem mindestens einen Beschleunigungssignal (beziehungsweise den Messdaten) bestimmten mehreren signifikanten Merkmalen ohne weitere Fehler- und/oder Schadenssimulationen automatisiert zu definieren. Insbesondere kann so auch das Auftreten unvorhergesehener, vorher nicht klassifizierter Fehler und/oder Schäden sicher erkannt werden. Schließlich ergibt sich als weiterer Vorteil, dass durch das unüberwachte und inkrementelle Lernen, insbesondere des aktuellen Beschleunigungsverhaltens der wenigstens einen Fahrzeugkomponente, eine selbsttätige Anpassungsfähigkeit während des bestimmungsgemäßen Einsatzes der Schienenfahrzeuge sichergestellt ist. Je höher die Einsatzzeit des Schienenfahrzeuges ist, um so genauer wird letztendlich die Überwachung des Fahrverhaltens, so dass insgesamt durch das erfindungsgemäße Verfahren eine minimale Fehlalarmrate und damit eine hohe Zuverlässigkeit des Überwachungs-/Diagnoseverfahrens gewährleistet werden kann.

Im Sinne der Erfindung wird unter "unüberwachtem inkrementellen Lernen" ein von einem Gutzustand ausgehender Lemprozess unter blosser Verwendung jeweils aktueller Messdaten, insbesondere aus dem Regelfahrbetrieb entstammend, verstanden.

Erfindungsgemäß wird die Aufgabe ferner durch eine Vorrichtung mit den im Anspruch 24 genannten Merkmalen gelöst. Dadurch, dass Mittel zum Erfassen von wenigstens einem das Beschleunigungsverhalten wenigstens einer Fahrzeugkomponente charakterisierenden Messdatum, welches zugleich zum Vergleich des derart erfassten Messdatums mit einem erwarteten Messdatum als auch zum unüberwachten und inkrementellen Erlernen der zu erwartenden Messdaten auf Basis der aktuell erfassten Messdaten dient, vorgesehen sind, lässt sich unter Anwendung des erfindungsgemässen Verfahrens in einfacher Weise eine Vorrichtung bereitstellen, mittels der eine sichere und hochgenaue Überwachung des Fahrverhaltens von Schienenfahrzeugen möglich ist. Insbesondere kann in bevorzugter Ausgestaltung vorgesehen sein, dass die erfindungsgemäße Vorrichtung in jedem Schienenfahrzeug eines Zugverbandes oder vorzugsweise bei einem aus mehreren Schienenfahrzeugen bestehenden Zugverband einem der Schienenfahrzeuge des Zugverbandes zugeordnet ist. Hierdurch lässt sich die Überwachung für mehrere Schienenfahrzeuge in einfacher Weise gleichzeitig durchführen.

Die Erfindung ermöglicht insbesondere eine zustandsbezogene Instandhaltung der Schienenfahrzeuge. Das Überwachungsverfahren kann insbesondere in einfacher Weise in eine Onboard-Diagnose der Schienenfahrzeuge integriert werden.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen näher erläutert. Es zeigen:
- Figur 1: eine schematische Draufsicht auf ein Schienenfahrzeug
- Figur 2: ein Blockschaltbild des erfindungsgemäßen Verfahrens zum Überwachen des Fahrverhaltens des Schienenfahrzeuges und
- Figur 3: ein Blockschaltbild des Verfahrens in einer weiteren Variante.

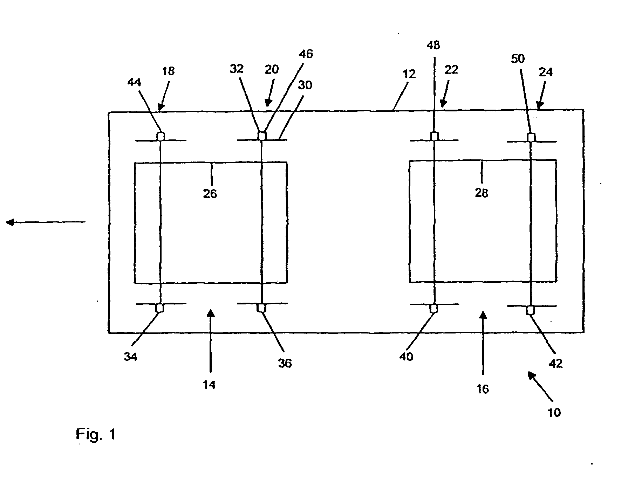

Figur 1 zeigt eine schematische Draufsicht auf ein Schienenfahrzeug 10. Bei dem hier dargestellten Schienenfahrzeug 10 handelt es sich beispielsweise um einen Mittelwagen eines Hochgeschwindigkeitszuges. Die Erfindung wird lediglich beispielhaft an hand dieses Mittelwagens erläutert. Selbstverständlich lässt sich die Erfindung ohne weiteres auf andere Schienenfahrzeuge, beispielweise Triebfahrzeuge, Steuerwagen, Güterwagen oder dergleichen, übertragen.

Das Schienenfahrzeug 10 umfasst einen Wagenkasten 12, der auf zwei Laufdrehgestellen 14 und 16 gelagert ist. Die Laufdrehgestelle 14 und 16 umfassen jeweils Radsätze 18, 20, 22 und 24. Der allgemeine Aufbau derartiger Schienenfahrzeuge 10, insbesondere die Ankopplung des Wagenkastens 12 an die Laufdrehgestelle 14 und 16 beziehungsweise die Lagerung der Radsätze 18, 20, 22 und 24 an den Laufdrehgestellen 14 und 16 über primäre beziehungsweise sekundäre Feder-/Dämpfersysteme, ist allgemein bekannt, so dass hierauf im Einzelnen im Rahmen der vorliegenden Beschreibung nicht näher eingegangen werden soll.

Die Radsätze 18, 20, 22 und 24 sind an Drehgestellrahmen 26 und 28 angeordnet. Die Radsätze 18, 20, 22 und 24 umfassen Räder 30, die über hier angedeutete Radlager 32 gelagert sind.

Während des Einsatzes des Schienenfahrzeuges 10 rollen die Radsätze 18,20,22 und 24 über einen Fahrweg. Je nach Fahrgeschwindigkeit und Zustand des Fahrweges erfährt das Schienenfahrzeug 10 eine Schwingungsanregung. Diese Schwingungsanregung führt zu einem Schwingungsverhalten einzelner Komponenten des Schienenfahrzeuges 10. Entsprechend der Schwingungsanregung, die insbesondere abhängig von einer Geschwindigkeit V des Schienenfahrzeugs 10 und/oder einem Zustand des Fahrweges ist, erfahren die Komponenten des Schienenfahrzeugs 10 eine Beschleunigung in den drei Raumrichtungen, also in x-Richtung (Fahrtrichtung), z-Richtung (vertikal zur Fahrtrichtung) und y-Richtung (quer zur Fahrtrichtung).

Während des Einsatzes der Schienenfahrzeuge 10 können Schäden und/oder Fehler an einzelnen Komponenten des Schienenfahrzeuges 10 auftreten, die zu einer Beeinflussung des Schwingungsverhaltens einzelner Komponenten führen. Im Rahmen der vorliegenden Beschreibung soll beispielsweise auf Fehler beziehungsweise Schäden der Räder 30 Bezug genommen werden, die beispielsweise als eine Ftachstelle, eine Polygonbildung unterschiedlicher Ordnung, eine Riffelbildung an einer Radlauffläche, Ausbröckelungen und/oder Risse am Radkörper oder dergleichen auftreten können. Entsprechend tatsächlich vorhandener Fehler und/oder Schäden wird das Schwingungsverhalten der einzelnen Komponenten des Schienenfahrzeuges 10 beeinflusst, so dass die Beschleunigungen in den drei Raumrichtungen ebenfalls entsprechend beeinflusst sind.

Gegenstand der Erfindung ist das Erfassen und Auswerten von auf die Radsatzlager (Lagergehäuse) 32, vorzugsweise in Fahrtrichtung (x-Richtung), einwirkenden Beschleunigungen zur Erkennung von insbesondere Schäden an den Radsätzen 18, 20, 22 beziehungsweise 24.

Hierzu sind den Radsatzlagern (Lagergehäusen) 32 jeweils schematisch angedeutete Schwingungsaufnehmer 34, 36, 40, 42, 44, 46, 48 und 50 zugeordnet. Die Schwingungsaufnehmer 34, 36, 40, 42, 44, 46, 48 und 50 sind beispielsweise von Beschleunigungssensoren gebildet, die eine in x-Richtung - und entgegengesetzt - wirkende Beschleunigung auf die Radsatzlagergehäuse detektieren. Es wird deutlich, dass jedem Radsatzlagergehäuse des hier dargestellten Schienenfahrzeuges 10 jeweils ein Schwingungsaufnehmer (Beschleunigungssensor) 34, 36, 40, 42, 44, 46, 48, 50 zugeordnet ist, so dass insgesamt - gemäß dem Beispiel - acht Beschleunigungssignale zur Auswertung zur Verfügung stehen.

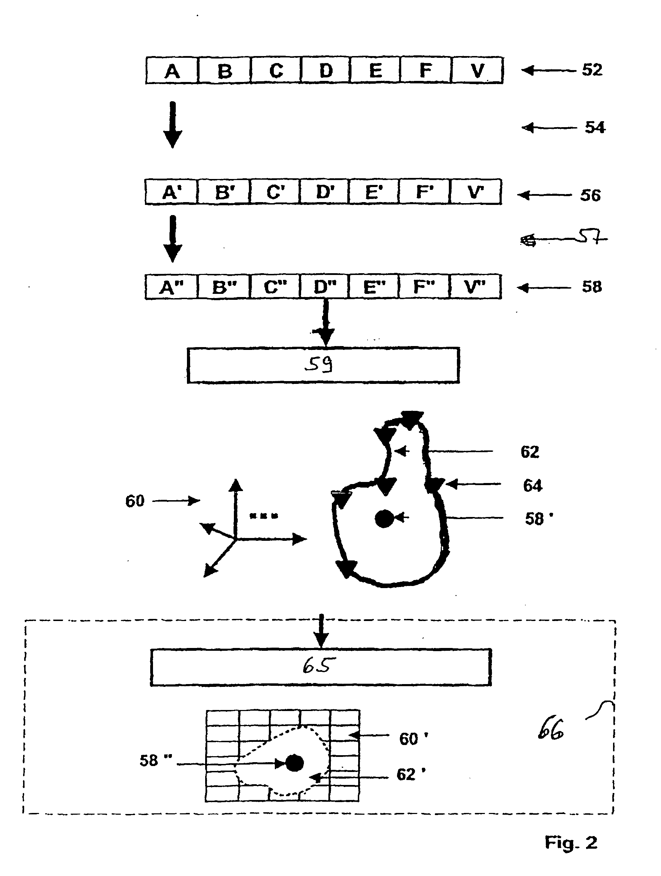

Charakteristische Größen eines Beschleunigungssignals werden nachfolgend mit Merkmal bezeichnet. Hierbei lassen sich beispielsweise - gemäß Figur 2 - ein Merkmal A entsprechend einem Crestfaktor des Beschleunigungssignals, ein Merkmal B entsprechend einem Kurtosiswert des Beschleunigungssignals, ein Merkmal C entsprechend einer Amplitude der zweiten Raddrehzahlharmonischen, ein Merkmal D entsprechend einer Amplitude der dritten Raddrehzahlharmonischen, ein Merkmal E entsprechend einer Amplitude der vierten Raddrehzahlharmonischen und ein Merkmal F entsprechend einer Differenz zwischen der Gesamtenergie und der Breitbandenergie unter einer bestimmten Hüllkurve des im Frequenzspektrum betrachteten Beschleunigungssignals berechnen beziehungsweise messen.

Die hier beispielhaft genannten Merkmale A, B, C, D, E und F lassen sich mit bekannten Verfahren aus dem tatsächlich anliegenden Beschleunigungssignal für jede der drei Raumrichtungen - wobei hier von der Erfassung des Beschleunigungssignals in x-Richtung (Fahrtrichtung) ausgegangen wird - berechnen beziehungsweise messen. Auf die Berechnung dieser Merkmale A, B, C, D, E, F soll im Rahmen der vorliegenden Beschreibung daher nicht näher eingegangen werden. Weitere Merkmale können zum Beispiel durch Cepstrumanalyse oder Waveletanalyse gewonnen werden.

Die Merkmale A, B, C, D, E, F lassen sich für jedes Beschleunigungssignal über eine bestimmte Zeitspanne ermitteln. Diese Zeitspanne kann beispielsweise zwischen 10 und 30 Sekunden betragen. Ein gleitendes Zeitfenster mit einem Überlappungsgrad von 50 bis 90 % ist zu empfehlen, so dass durch Überschneidung von Messzyklen die Auswertegenauigkeit erhöht ist.

Aus den Merkmalen A, B, C, D, E, F eines Beschleunigungssignals, das heißt das von einem der Beschleunigungsaufnehmer 34, 36, 40, 42, 46, 48 oder 50 gelieferte Beschleunigungssignal und die aktuelle Fahrgeschwindigkeit V des Schienenfahrzeuges 10, wird ein - im Beispiel - siebendimensionaler Merkmalsvektor 52 gebildet. Dieser siebendimensionale Merkmalsvektor 52 enthält somit die numerischen Werte jedes der betrachteten Merkmale A, B, C, D, E, F und der Fahrgeschwindigkeit V.

Die Merkmale A, B, C, D, E, F und die Fahrgeschwindigkeit V werden anschließend einer Normierung 54 zugeführt, wobei die Merkmale A, B, C, D, E, F und die Fahrgeschwindigkeit V auf einen Wert zwischen zum Beispiel 0 und 1 sowie auf eine günstigere Verteilung skaliert werden. Die Skalierung erfolgt hierbei beispielsweise mittels einer Exponentialfunktion oder mit einer logarithmischen Funktion oder mit bekannten statistischen Verfahren. Möglich ist beispielsweise eine Intervallskalierung, eine Varianznormalisierung, eine Histogrammangleichung oder dergleichen.

Jedem der Merkmale A, B, C, D, E, F und der Fahrgeschwindigkeit V ist somit nach der Normierung ein skalierter Wert N, B', C', D/, E', F' beziehungsweise V' zugeordnet. Diese Werteschar 56 kann entsprechend der Bedeutung der normierten Einzelwerte A', B', C', D/, E', F', V' einer Wichtung 57 bei der Bildung des Merkmalsvektors 58 unterzogen werden. Dies bedeutet, die Einzelwerte A', B', C', D', E', F' und/oder V' gehen nach einer ersten Ausführungsvariante insgesamt mit einer unterschiedlichen Wichtigkeit in den Merkmalsvektor 58 ein.

Der Merkmalsvektor 58 stellt ein gewichtetes Kriterium für das von einem der Beschleunigungsaufnehmer 34, 36, 40, 42, 44, 46, 48, 50 gelieferte Beschleunigungssignal in x-Richtung dar. Alle zur Charakterisierung des Beschleunigungssignals herangezogenen Merkmale A, B, C, D, E, F und die momentane Fahrgeschwindigkeit V sind in dem nunmehr vorliegenden Merkmalsvektor 58 berücksichtigt.

Unter Zuhilfenahme statistischer Lemverfahren, beispielsweise einer so genannten SVM (Support-Vektor-Maschine) 59, werden aus den Lerndaten (Merkmalsvektoren 58) eine Reihe multidimensionaler Stützpunktvektoren (Support-Vektoren 64) berechnet. Entsprechend der Wertigkeit des Merkmalsvektors 58 wird in einem multidimensionalen Raum 60 ein Koordinatenpunkt 58' entsprechend dotiert. Zwecks Visualisierung können diese Stützpunktvektoren mit Hilfe von sammon's mapping oder SOM (self organizing map) 65 auf einer zweidimensionalen Ebene 60' dargestellt werden.

Durch Übertragung des Merkmalsvektors 58 auf den Koordinatenpunkt 58' ist somit jedem Beschleunigungssignal ein bestimmter Punkt innerhalb des multidimensionalen Raumes 60 zuordbar.

Durch wiederholtes Abarbeiten des in Figur 2 anhand des Blockschaltbildes verdeutlichten Algorithmus kann somit den an den einzelnen Radsatzlagern (Lagergehäusen) 32 auftretenden Beschleunigungen in einem bestimmten Bereich des multidimensionalen Raumes 60 ein bestimmter Koordinatenpunkt 58' zugeordnet werden. Bei angenommen gleichen Bedingungen, die sich in den Merkmalen A, B, C, D, E, F und der Fahrgeschwindigkeit V definieren lassen, müsste somit der Koordinatenpunkt 58' immer die gleiche Position in dem multidimensionalen Raum 60 einnehmen. Abweichende-Merkmale A, B, C, D, E, F führen bei gleicher Geschwindigkeit V über die Normierung 54 zu abweichenden numerischen Werten 56 und somit zu einem abweichenden Merkmalsvektor 58. Eine Abweichung des Merkmalsvektors 58 führt zu einer Positionsänderung des Koordinatenpunktes 58' in dem multidimensionalen Raum 60. Es wird deutlich, dass somit durch einfachen Positionsvergleich der Koordinatenpunkte 58' in dem multidimensionalen Raum 60 Veränderungen im Schwingungsverhalten durch geänderte Beschleunigungswerte erfassbar sind.

Während einer Lernphase können somit alle auftretenden Beschleunigungen an den Radsatzlagem 32 bei unterschiedlichen Fahrgeschwindigkeiten und bei unterschiedlichen Fahrwegeigenschaften (beispielsweise Weichenfahrt, Bogenfahrt, Rampenfahrt oder dergleichen) entsprechend ausgewertet werden, so dass sich ein in dem multidimensionalen Raum 60 der Figur 2 mit 62 bezeichneter Überwachungsbereich (bespannt durch Support-Vektoren 64) ergibt, innerhalb dem die Koordinatenpunkte 58' bei allen regulären Fahrsituationen liegen. Je länger die Lernphase dauert, um so genauer kann der Überwachungsbereich 62 definiert werden.

Der Umfang der Lemphase resultiert beispielsweise aus der Berücksichtigung aller im Regelfahrbetrieb 86 auftretenden Betriebszustände. Es wird deutlich, dass mit fortwährendem und wiederholtem Lernen die Genauigkeit der Festlegung des Überwachungsbereiches 62 zunimmt. Denkbar ist, dass nach einer reinen Lemphase die Überwachungs- und Lernfunktion gleichzeitig aktiviert wird, wobei mit steigender Laufleistung die Lemintensität abklingt. Beispielsweise kann die Lernphase auch dadurch verkürzt werden, dass bei baugleichen Schienenfahrzeugen 10 ein von einem bereits im bestimmungsgemäßen Einsatz befindlichen Schienenfahrzeug 10 ermittelter Überwachungsbereich 62 einem anderen Schienenfahrzeug 10 als bereits vorgelemte Ausgangsinformation zur Verfügung gestellt wird.

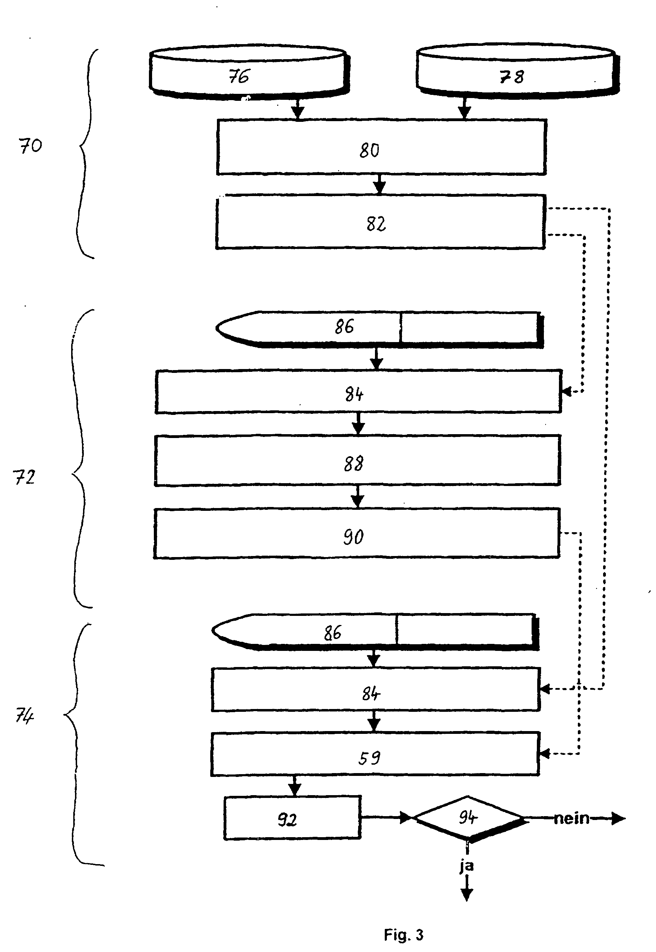

In Abweichung zu der vorherstehenden Erläuterung kann in einer weiteren Ausführungsvariante vorgesehen sein, dass die der Support-Vektor-Maschine 59 zugeführten Lerndaten (Merkmalsvektoren 58) ebenfalls bereits mit einem Support-Vektor-Maschinen-basierten Verfahren bestimmt werden. Hierbei wird wissensbasiert (Ingeni-eurwissen) eine Grobauswahl von Merkmalen (Schritt 80 in Figur 3) vorgenommen.

Hierbei können je Beschleunigungssignal am Radsatzlager eine hinreichend große Anzahl von Merkmalen zugeordnet werden.

In einer nachfolgenden Merkmalsselektion 82 mit Support-Vektor-Maschinen-basierten Verfahren werden zunächst beispielsweise zwanzig oder auch weniger Merkmale unter Berücksichtigung von Messdaten aus Schadenssimulationen 78 und Referenzfahrten 76 automatisiert ausgewählt, die für die Radsatzdiagnose ausreichend sind. Anhand dieser ausgewählten Merkmale wird zwar nur ein Teil des realen Systems beschrieben, jedoch hat sich gezeigt, dass diese ausgewählten Merkmale durch Verarbeitung mit einer Support-Vektor-Maschine zur Detektion vordefinierter Schäden des Systems ausreichend sind. Es hat sich gezeigt, dass schon bei wenigen ausgewählten Merkmalen durch die Verarbeitung mit einer Support-Vektor-Maschine die Fehlererkennungsrate des Systems stark ansteigt. Während bei zwei Merkmalen die Fehlererkennungsrate noch bei 80 % liegt, sind bei sechs Merkmalen schon Fehlererkennungsraten von mehr als 96 % erreichbar. Diese gestatten somit eine fast vollständige Fehlererkennung, wobei die tatsächliche Merkmalsanzahl sich nach der geforderten Fehlererkennungsrate richtet. Diese vorausgewählten und anschließend selektierten Merkmale liefern somit eine ausreichende Basis für die Radsatzdiagnose.

Für die nachfolgende Bearbeitung (Lemphase) mit der Support-Vektor-Maschine 59 - wie anhand der Figur 2 erläutert - werden die selektierten Merkmale aus den dann tatsächlich gemessenen Beschleunigungssignalen berechnet und entsprechend der bereits erläuterten Vorgehensweise verarbeitet.

Bei dieser Herangehensweise verringert sich die Dimension des mehrdimensionalen Merkmalsvektors 52, da nichtsignifikante und/oder redundante Merkmale unberücksichtigt bleiben. Die Wichtung 57 entfällt.

Die Genauigkeit und Effektivität des Verfahrens wird hierdurch deutlich verbessert.

Figur 3 zeigt in einem Blockschaltbild nochmals das Gesamtablaufschema einer Support-Vektor-Maschine-basierten Diagnose.

Zunächst wird deutlich, dass sich der Gesamtablauf in die Phase 70 für die Merkmalsfestlegung, die Phase 72 für die Lemphase und die Phase 74 für die Übervvachungsphase gliedert. Während der Phase 70 erfolgt zunächst eine Merkmalsgrobauswahl 80, die zu einer Anzahl von x Merkmalen je Signal führt. Hierbei wird auf Ingenieurwissen zurückgegriffen. Dies betrifft auch die sinnvolle Anordnung von Sensoren.

Diese nunmehr ausgewählten x Merkmale werden einer Merkmalsselektion 82 zugeführt, bei der aus den vorausgewählten x Merkmalen unter Berücksichtigung von Messdaten aus Schadenssimulationen 78 und Referenzfahrten 76 eine Anzahl von Merkmalen x' selektiert wird, die sehr viel kleiner ist als die Anzahl der Merkmale x. Hierbei wird eine Redundanz der Merkmale x eliminiert.

Diese selektierten Merkmale x' werden einer Merkmalsberechnung 84 in der Lernphase 72 zugeführt. Die Lernphase 72 erfolgt während eines Regelfahrbetriebes 86 des Schienenfahrzeuges. Diese aus den Beschleunigungssignalen während des Regelfahrbetriebes 86 berechneten Merkmale x' werden zur Generierung von Support-Vektoren einer automatischen Parametrierung 88 zugeführt. Hierbei werden als Einstellparameter beispielsweise eine zulässige Ausreißerrate im Regelfahrbetrieb, beispielsweise verursacht durch Störstellen, sowie eine Zeitdauer und/oder eine Streckenlänge der Lemphase 72 herangezogen.

Die Ausgabe der Support-Vektor-Maschine (Ausgabe eines Klassifikators h(x)) wird nachfolgend zur Festlegung von Grenzwerten des Klassifikators einer manuellen Parametrierung 90 zugeführt.

In der anschließenden Überwachungsphase 74, in der das eigentliche Überwachen der überwachten Komponenten (hier beispielsweise des Rades) während des Regelfahrbetriebes 86 erfolgt, wird wiederum die Merkmalsberechnung 84 der bei der Merkmalsselektion 82 ausgewählten Merkmale x' durchgeführt. Diese werden der Support-Vektor- Maschine 59 (Klassifikator) zugeführt, die die während der Lemphase 72 ermittelten Support-Vektoren nutzt. Die Ergebnisse (Angabe des Klassifikators h(x)) der Support-Vektor-Maschine 59 werden einem Logikeditor 92 zugeführt, der eine Entscheidung 94 trifft, ob ein Alarmsignal generiert wird Ga) oder nicht generiert wird (nein).

Die vorstehenden Erläuterungen bezogen sich auf den Algorithmus und die Lemphase eines der in Figur 1 angedeuteten Beschleunigungsaufnehmers. Durch beispielsweise einen entsprechenden Multiplexbetrieb können die Überwachungsbereiche 62 quasi zeitgleich für alle in Figur 1 mit 34, 36, 40, 42, 44, 46, 48 beziehungsweise 50 bezeichneten Beschleunigungsaufnehmer durchgeführt werden. Gemäß der hier gewählten Anzahl von acht Beschleunigungsaufnehmem ergibt sich nach der Lemphase somit ein Überwachungsbereich 62, innerhalb dem die Koordinatenpunkte 58' aller den entsprechenden Vektoren 58 entsprechenden Beschleunigungssignale liegen. Dieser Überwachungsbereich 62 stellt somit einen schienenfahrzeuggebundenen Überwachungsbereich dar.

An die reine Lemphase des Systems schließt sich die Überwachungsphase an, die von einer "Weiterlernphase" überlagert ist. Während dieser Überwachungsphase kann nunmehr die Fehler- und/oder Schadenserkennung durchgeführt werden. Diese Überwachung erfolgt derart, dass intervallmäßig entsprechend vorgebbarer Zyklen, die beispielsweise von 10 bis 30 Sekunden betragen können, die Positionen der Merkmalsvektoren 58' im multidimensionalen Raum 60 erfasst und verglichen werden. Bei entsprechend gewählter Überlappung der Zyklen können dann auch Reaktionszeiten in der Größenordnung von wenigen Sekunden realisiert werden. Es ergeben sich eine Vielzahl von Auswertemöglichkeiten, von denen nachfolgend nur einige beispielhaft genannt werden. So lässt sich beispielsweise die Koordinatenverschiebung eines Koordinatenpunktes 58' bezogen auf einen der Beschleunigungsaufnehmer überwachen. Verlässt beispielsweise der Koordinatenpunkt 58' den Überwachungsbereich 62, kann auf einen Fehler und/oder Schaden erkannt werden. Ferner kann eine vergleichende Betrachtung der von den mehreren - beispielsweise acht - Beschleunigungsaufnehmern hergeleiteten Koordinatenpunkte 58' untereinander erfolgen. Ist beispielsweise in aufeinander folgenden Überwachungszyklen ein Mindestabstand zwischen den Koordinatenpunkte 58' überschritten, kann ebenfalls auf einen Fehler und/oder Schaden erkannt werden.

Wird während der Überwachung - entsprechend der festgelegten Überwachungskriterien - nicht auf einen Fehler und/oder Schaden erkannt, wird das jeweilige Ereignis je nach Bedarf und Situation (zum Beispiel anhand der Entfernung des Punktes 58' zum Überwachungsbereich 62) zum Weiterlernen genutzt. Hierdurch wird auch während der aktuellen Überwachungsphase die Genauigkeit der Beschreibung des Referenzzustandes ständig erhöht.

Neben einer rein rechnerischen Auswertung und entsprechenden Alarmsignalisierung im Fehler- und/oder Schadensfall lässt sich das skizzierte Verfahren auch in einfacher Weise visualisieren, indem die zweidimensionale Ebene 60' mit den Koordinatenpunkten 58" und dem Überwachungsbereich 62' auf einem entsprechenden Display 66 dargestellt wird. Beispielsweise durch farbliche Zuordnung der Koordinatenpunkte 58' zu den einzelnen Radsatzlagem 32 kann somit durch schnelles visuelles Erfassen eine Fehlerzuordnung erfolgen. Ferner lassen sich die gesamte Lemphase und Überwachungsphase speichern, so dass für nachfolgende, gegebenenfalls detailliertere Auswertungen, wie beispielsweise die Erarbeitung von Schadensmustem und Durchführung von Trendanalysen, die entsprechenden Daten zur Verfügung stehen.

Die Erfindung beschränkt sich selbstverständlich nicht auf das dargestellte Ausführungsbeispiel. So sind auch beispielsweise Überwachungen von weniger oder mehr als acht Beschleunigungssensoren und anderen Komponenten des Schienenfahrzeuges 10 als den Rädern möglich. Ferner kann die Anzahl der für die Auswertung herangezogenen charakteristischen Merkmale variieren. Vorstellbar ist auch die prinzipielle Verwendung anderer Sensoren als Beschleunigungssensoren beziehungsweise die Verwendung von Merkmalen, die aus unterschiedlichen Signaltypen, zum Beispiel Beschleunigung, Kraft, Weg, Temperatur oder dergleichen, gebildet wurden.

### Bezugszeichenliste

- 10: Schienenfahrzeug
- 12: Wagenkasten
- 14, 16: Laufdrehgestelle
- 18, 20, 22, 24: Radsätze
- 26, 28: Drehgestellrahmen
- 30: Räder
- 32: Radsatzlager
- 34, 36, 40, 42 44, 46, 48, 50: Schwingungsaufnehmer
- 52: Merkmalsvektor
- 54: Normierung
- 56: Werteschar
- 57: Wichtung
- 58: gewichteter Merkmalsvektor
- 58': Koordinatenpunkt im multidimensionalen Raum
- 58": Koordinatenpunkt im zweidimensionalen Raum
- 59: Support-Vektor-Maschine
- 60: Bereich (Region) im multidimensionalen Raum
- 60': zweidimensionale Ebene
- 62: Überwachungsbereich
- 62': Überwachungsbereich 62 in 2D-Darstellung
- 64: Support-Vektor
- 65: smmon's mapping oder SOM (self organizing map)
- 66: Display
- 70: Phase (Merkmalsfestlegung)
- 72: Lernphase
- 74: Überwachungsphase
- 76: Referenzfahrten
- 78: Schadenssimulation
- 80: Merkmalsgrobauswahl
- 82: Merkmalsselektion
- 84: Merkmalsberechnung
- 86: Regelfahrbetrieb
- 88: automatische Parametrierung
- 90: manuellen Parametrierung
- 92: Logikeditor
- 94: Entscheidung zur Generierung

- A, B, C, D, E, F, V: Merkmale
- A', B', C', D', E', F', V': normierte Merkmale
- A", B", C", D", E", F", V": gewichtete, normierte Merkmale

## Patentansprüche

1. Verfahren zum Überwachen des Fahrverhaltens von Schienenfahrzeugen und der Diagnose von Schäden an Komponenten von Schienenfahrzeugen, wobei nach einer anfänglichen reinen unüberwachten Lemphase mindestens ein das Beschleunigungsverhalten wenigstens einer Fahrzeugkomponente charakterisierendes Messdatum erfasst wird und das derart erfasste Messdatum mit einem zu erwartenden Messdatum verglichen wird, **dadurch gekennzeichnet, dass** das mindestens eine erfasste Messdatum während des Betriebseinsatzes des Schienenfahrzeuges (10) zugleich für den aktuellen Überwachungsvergleich herangezogen wird als auch in einen unüberwachten inkrementellen Lernvorgang zur Ermittlung eines mehrdimensionalen, durch Merkmalsvektoren (58) erfasster Messdaten aufgespannten Raumes (60) für zu einem späteren Zeitpunkt stattfindende Vergleiche eingebunden wird.

2. Verfahren nach Anspruch 1, **dadurch gekennzeichnet, dass** das Beschteunigungsverhalten von Radsatzlagem überwacht wird.

3. Verfahren nach einem der vorhergehenden Ansprüche, **dadurch gekennzeichnet, dass** das Beschleunigungsverhalten von allen Radsatzlagem des Schienenfahrzeuges (10) überwacht wird.

4. Verfahren nach einem der vorhergehenden Ansprüche, **dadurch gekennzeichnet, dass** das Beschleunigungsverhalten der Radsatzlager eines Schienenfahrzeuges (10) gleichzeitig oder im Zeitmultiplex aufeinander folgend überwacht wird.

5. Verfahren nach einem der vorhergehenden Ansprüche, **dadurch gekennzeichnet, dass** die für die Überwachung charakteristischen Merkmale (A, B, C, D, E, F) jedes Beschleunigungssignals berechnet werden.

6. Verfahren nach Anspruch 5, **dadurch gekennzeichnet, dass** als charakteristische Merkmale statistische Kennwerte, Kennwerte der Frequenz- und Ordnungsanalyse sowie der Hüllkurvenanalyse verwendet werden.

7. Verfahren nach einem der Ansprüche 5 oder 6, **dadurch gekennzeichnet, dass** die Werte der charakteristischen Merkinale in festgelegten Zeitintervallen, die zwischen 10 und 30 Sekunden betragen können, neu ermittelt werden.

8. Verfahren nach einem der Ansprüche 5 bis 7, **dadurch gekennzeichnet, dass** aus den charakteristischen Merkmalen inklusive der aktuellen Fahrgeschwindigkeit des Schienenfahrzeuges (10) ein mehrdimensionaler Merkmalsvektor (52) gebildet wird.

9. Verfahren nach Anspruch 8, **dadurch gekennzeichnet, dass** die Merkmale des Merkmalsvektors (52) normiert werden.

10. Verfahren nach Anspruch 9, **dadurch gekennzeichnet, dass** die skalierten Werte (56) zu einem Merkmalsvektor (58) zusammengefasst werden.

11. Verfahren nach einem der Ansprüche 8 bis 10, **dadurch gekennzeichnet, dass** bei der Ermittlung des Merkmalsvektors (58) die einzelnen skalierten Werte (56) gewichtet werden.

12. Verfahren nach Anspruch 5, **dadurch gekennzeichnet, dass** zunächst wissensbasiert eine Grobauswahl (80) von möglichen Merkmalen je Beschleunigungssignal vorgenommen wird.

13. Verfahren nach Anspruch 12, **dadurch gekennzeichnet, dass** aus den grobausgewählten Merkmalen automatisiert Merkmale selektiert werden, die für die Diagnoseaufgabe ausreichend sind.

14. Verfahme nach Anspruch 13, **dadurch gekennzeichnet, dass** die Merkmalselektion (82) unter Berücksichtigung von Messdaten aus Schadenssimulationen (78) und Referenzfahrten (76) erfolgt.

15. Verfahren nach einem der Ansprüche 8 bis 14, **dadurch gekennzeichnet, dass** der Merkmalsvektor (58) als Koordinatenpunkt (58') in einen multidimensionalen Raum (60) übertragen wird.

16. Verfahren nach Anspruch 15, **dadurch gekennzeichnet, dass** für jedes Beschleunigungssignal jeder der zu überwachenden Fahrzeugkomponenten die Lage der Koordinatenpunkte (58') aufeinanderfolgend, insbesondere entsprechend festlegbarer Zeitintervalle, neu bestimmt wird.

17. Verfahren nach Anspruch 15 oder 16, **dadurch gekennzeichnet, dass** über die Lage der Koordinatenpunkte (58') während einer mittels einer vorgebbaren Zeitspanne definierten Lemphase ein Bereich (62) in dem Raum (60) definiert wird, der als Überwachungsbereich fungiert.

18. Verfahren nach einem der Ansprüche 15 bis 17, **dadurch gekennzeichnet, dass** eine Positionsveränderung eines Koordinatenpunktes (58') bezogen auf Beschleunigungssignale einer überwachten Fahrzeugkomponente überwacht wird.

19. Verfahren nach einem der Ansprüche 15 bis 17, **dadurch gekennzeichnet, dass** ein Abstand der Koordinatenpunkte (58') mehrerer überwachter Fahrzeugkomponenten überwacht wird.

20. Verfahren nach einem der Ansprüche 15 bis 18, **dadurch gekennzeichnet, dass** eine Alarmmeldung, gegebenenfalls gekoppelt mit einer Abhilfemaßnahme, generiert wird, wenn der Koordinatenpunkt (58') den Überwachungsbereich ausserhalb eines vorbestimmbaren Abweichungswertes verlässt.

21. Verfahren nach einem der vorhergehenden Ansprüche, **dadurch gekennzeichnet, dass** die Überwachungsergebnisse gespeichert werden.

22. Verfahren nach einem der vorhergehenden Ansprüche, **dadurch gekennzeichnet, dass** die Überwachungsergebnisse visualisiert werden.

23. Verfahren nach einem der vorhergehenden Ansprüche, **dadurch gekennzeichnet, dass** als Messdaten Beschleunigung, Kraft, Weg und/oder Temperatur oder dergleichen verwendet werden.

24. Vorrichtung zum Überwachen des Fahrverhaltens von Schienenfahrzeugen und der Diagnose von Schäden an Komponenten von Schienenfahrzeugen unter Anwendung eines Verfahrens nach einem der Ansprüche 1 bis 23, **gekennzeichnet durch** Mittel zum Erfassen von wenigstens einem das Beschleunigungsverhalten wenigstens einer Fahrzeugkomponente charakterisierenden Messdatum, welches zugleich zum Vergleich des derart erfassten Messdatums mit einem erwarteten Messdatum als auch zum unüberwachten und inkrementellen Erlernen der zu erwartenden Messdaten auf Basis der aktuell erfassten Messdaten dient.

## Claims

1. A method for monitoring the running behavior of rail vehicles and for diagnosing damages on components of rail vehicles, wherein at least one measuring datum that characterizes the acceleration behavior of at least one vehicle component is acquired after an initial unmonitored phase that consists of a mere learning phase, and wherein the thusly acquired measuring datum is compared with a measuring datum to be expected, **characterized in that** the at least one acquired measuring datum is simultaneously utilized in the present monitoring comparison during the operation of the rail vehicle (10), as well as incorporated into an unmonitored incremental learning process in order to determine a multidimensional space (60) that is defined by attribute vectors (58) of acquired measuring data and used for comparisons carried out at a later time.

2. The method according to Claim 1, **characterized in that** the acceleration behavior of axleboxes is monitored.

3. The method according to one of the preceding claims, **characterized in that** the acceleration behavior of all axleboxes of the rail vehicle (10) is monitored.

4. The method according to one of the preceding claims, **characterized in that** the acceleration behavior of the axleboxes of a rail vehicle (10) is monitored simultaneously or successively in accordance with time-division multiplexing.

5. The method according to one of the preceding claims, **characterized in that** the attributes (A, B, C, E, F) of each acceleration signal that are characteristic for the monitoring are calculated.

6. The method according to Claim 5, **characterized in that** statistic parameters, parameters of the frequency- and order analysis, as well as of the envelope analysis, are used as characterizing attributes.

7. The method according to Claim 5 or 6, **characterized in that** the values of the characteristic attributes are determined anew in defined time intervals that lie between 10 and 30 seconds.

8. The method according to one of Claims 5-7, **characterized in that** a multidimensional attribute vector (52) is formed from the characteristic attributes and the current speed of the rail vehicle (10).

9. The method according to Claim 8, **characterized in that** the attributes of the attribute vectors (52) are standardized.

10. The method according to Claim 9, **characterized in that** the scaled values (56) are combined into an attribute vector (58).

11. The method according to one of Claims 8-10, **characterized in that** the individual scaled values (56) are weighted during the determination of the attribute vector (58).

12. The method according to Claim 5, **characterized in that** a coarse selection (80) of possible attributes is initially carried out in a knowledge-based fashion for each acceleration signal.

13. The method according to Claim 12, **characterized in that** attributes that suffice for the diagnostic task are automatically selected from the coarsely selected attributes.

14. The method according to Claim 13, **characterized in that** the attribute selection (82) is carried out with consideration of the measuring data of damage simulations (78) and reference runs (76).

15. The method according to one of Claims 8-14, **characterized in that** the attribute vector (58) is transferred into a multidimensional space (60) in the form of a coordinate point (58').

16. The method according to Claim 15, **characterized in that** the position of the coordinate points (58') is successively determined anew, particularly in accordance with predetermined time intervals.

17. The method according to Claim 15 or 16, **characterized in that** a region (62) that serves as a monitoring region is defined in the space (60) based on the position of the coordinate points (58') during a learning phase that is defined in the form of a predetermined duration.

18. The method according to one of Claims 15-17, **characterized in that** a change in position of a coordinate point (58) is monitored relative to the acceleration signal of a monitored vehicle component.

19. The method according to one of Claims 15-17, **characterized in that** a distance is monitored between the coordinate points (58') of several monitored vehicle components.

20. The method according to one of Claims 15-18, **characterized in that** an alarm signal is triggered, if so required, in combination with corrective measures if the coordinate point (58') moves out of the monitoring region by more than a predetermined deviation value.

21. The method according to one of the preceding claims, **characterized in that** the monitoring results are stored.

22. The method according to one of the preceding claims, **characterized in that** the monitoring results are visualized.

23. The method according to one of the preceding claims, **characterized in that** acceleration, force, path and/or temperature or the like are used as measuring data.

24. A device for monitoring the running behavior of rail vehicles and for diagnosing damages on components of rail vehicles by utilizing a method according to one of Claims 1-23, **characterized by** means for acquiring at least one measuring datum that characterizes the acceleration behavior of at least one vehicle component, wherein said means simultaneously serve for comparing the thusly acquired measuring datum with an expected measuring datum, as well as for incrementally learning in an unmonitored fashion the measuring datum to be expected on the basis of the presently acquired measuring data.

## Revendications

1. Procédé de surveillance du comportement en circulation de véhicules ferroviaires et de diagnostic de détériorations de composants de véhicules ferroviaires, dans lequel, après une phase d'apprentissage initiale pure hors surveillance, au moins une donnée de mesure caractérisant le comportement à l'accélération d'au moins un composant du véhicule est enregistrée et la donnée de mesure ainsi enregistrée est comparée à une donnée de mesure à attendre, **caractérisé en ce que** l'au moins une donnée de mesure enregistrée est utilisée pendant le fonctionnement du véhicule ferroviaire (10) à la fois pour la comparaison en surveillance actuelle et pendant un processus d'apprentissage incrémentiel hors surveillance est intégrée pour déterminer un espace multidimensionnel (60) circonscrit par des vecteurs de caractéristiques (58) de données de mesure enregistrées pour des comparaisons ayant lieu à un moment ultérieur.

2. Procédé selon la revendication 1, **caractérisé en ce que** le comportement à l'accélération des paliers d'essieux est surveillé.

3. Procédé selon l'une quelconque des revendications précédentes, **caractérisé en ce que** le comportement à l'accélération de tous les paliers d'essieux du véhicule ferroviaire (10) est surveillé.

4. Procédé selon l'une quelconque des revendications précédentes, **caractérisé en ce que** le comportement à l'accélération des paliers d'essieux d'un véhicule ferroviaire (10) est surveillé en même temps ou successivement en multiplexe temporel.

5. Procédé selon l'une quelconque des revendications précédentes, **caractérisé en ce que** les caractéristiques typiques (A, B, C, D, E, F) de chaque signal d'accélération sont calculées.

6. Procédé selon la revendication 5, **caractérisé en ce qu'**on emploie comme caractéristiques typiques des valeurs caractéristiques statistiques, des valeurs caractéristiques d'analyse de fréquence et d'ordre ainsi que de l'analyse de courbe d'enveloppement.

7. Procédé selon l'une quelconque des revendications 5 ou 6, **caractérisé en ce que** les valeurs des caractéristiques typiques sont déterminées à nouveau à des intervalles de temps établis qui peuvent aller de 10 à 30 secondes.

8. Procédé selon l'une quelconque des revendications 5 à 7, **caractérisé en ce qu'**à partir des caractéristiques typiques, y compris la vitesse de circulation actuelle du véhicule ferroviaire (10), on constitue un vecteur de caractéristique multidimensionnel (52).

9. Procédé selon la revendication 8, **caractérisé en ce que** les caractéristiques du vecteur de caractéristique (52) sont normalisées.

10. Procédé selon la revendication 9, **caractérisé en ce que** les valeurs échelonnées (56) sont regroupées en un vecteur de caractéristique (58).

11. Procédé selon l'une quelconque des revendications 8 à 10, **caractérisé en ce qu'**à la détermination du vecteur de caractéristique (58), les différentes valeurs échelonnées (56) sont pondérées.

12. Procédé selon la revendication 5, **caractérisé en ce qu'**en se basant d'abord sur des connaissances, on procède à un choix grossier (80) de caractéristiques possibles par signal d'accélération.

13. Procédé selon la revendication 12, **caractérisé en ce qu'**à partir des caractéristiques sélectionnées grossièrement, on sélectionne de manière automatisée des caractéristiques qui sont suffisantes pour la mission de diagnostic.

14. Procédé selon la revendication 13, **caractérisé en ce que** la sélection de caractéristiques (82) a lieu en tenant compte de données de mesure issues de simulations de détériorations (78) et de trajets de référence (76).

15. Procédé selon l'une quelconque des revendications 8 à 14, **caractérisé en ce que** le vecteur de caractéristique (58) est transposé sous forme de point de coordonnée (58') dans un espace multidimensionnel (60).

16. Procédé selon la revendication 15, **caractérisé en ce que**, pour chaque signal d'accélération de chacun des composants du véhicule à surveiller, on détermine de nouveau la position des points de coordonnées (58') successivement, notamment en fonction d'intervalles de temps prédéfinissables.

17. Procédé selon la revendication 15 ou 16, **caractérisé en ce que**, par le positionnement des points de coordonnées (58'), il est défini., pendant une phase d'apprentissage définie au moyen d'un laps de temps prescriptible, une zone (62) de l'espace (60) qui fait fonction de zone de surveillance.

18. Procédé selon l'une quelconque des revendications 15 à 17, **caractérisé en ce qu'**un changement de position d'un point de coordonnées (58') est surveillé en référence aux signaux d'accélération d'un composant du véhicule surveillé.

19. Procédé selon l'une quelconque des revendications 15 à 17, **caractérisé en ce qu'**une distance entre les points de coordonnées (58') de plusieurs composants surveillés du véhicule est surveillée.

20. Procédé selon l'une quelconque des revendications 15 à 18, **caractérisé en ce qu'**un message d'alarme, éventuellement couplé à une mesure d'assistance, est généré lorsque le point de coordonnée (58') quitte la zone de surveillance et passe en dehors d'une valeur d'écart prédéfinissable.

21. Procédé selon l'une quelconque des revendications précédentes, **caractérisé en ce que** les résultats de la surveillance sont sauvegardés.

22. Procédé selon l'une quelconque des revendications précédentes, **caractérisé en ce que** les résultats de la surveillance sont visualisés.

23. Procédé selon l'une quelconque des revendications précédentes, **caractérisé en ce qu'**on utilise comme données de mesure l'accélération, la force, la course et/ou la température ou similaire.

24. Procédé de surveillance du comportement en circulation de véhicules ferroviaires et de diagnostic de détériorations de composants de véhicules ferroviaires en utilisant un procédé suivant l'une quelconque des revendications 1 à 23, **caractérisé par** des moyens d'enregistrement d'au moins une valeur de mesure caractérisant le comportement à l'accélération d'au moins un composant du véhicule, qui sert à la fois à comparer la donnée de mesure ainsi enregistrée à une valeur de mesure attendue et à permettre l'apprentissage hors surveillance et incrémentiel des données de mesure attendues sur la base des données de mesure actuellement enregistrées.
